# EUROPÄISCHE PATENTSCHRIFT

(11) **EP 1 862 386 B1**
(45) Veröffentlichungstag und Bekanntmachung des Hinweises auf die Patenterteilung: **12.09.2012**
(21) Anmeldenummer: 07009159.0
(22) Anmeldetag: 07.05.2007
(51) Int. Cl.: F16K 47/04, B63G 8/22, B63G 8/26

(54) **Unterseeboot**
Submarine
Submersible

(30) Priorität: 02.06.2006 DE 102006025803
(43) Veröffentlichungstag der Anmeldung: 05.12.2007
(73) Patentinhaber: Howaldtswerke-Deutsche Werft GmbH, 24143 Kiel (DE)
(72) Erfinder: Bücher, Richard, 23611 Bad Schwartau (DE); Spreckelmeyer, Jan, 24229 Dänischenhagen (DE); Kaiser, Christian, 23996 Bad Kleinen (DE)
(74) Vertreter: Hemmer, Arnd

(56) Entgegenhaltungen:
- GB-A- 190 107 743
- US-A- 3 667 415
- US-A- 3 722 854
- US-A- 4 739 795

## Beschreibung

Die Erfindung betrifft ein Unterseeboot mit zumindest einer Regelzelle.

Unterseeboote weisen bekanntermaßen Regelzellen auf, welche mit Wasser befüllbar sind, um in Unterwasserfahrt einen Gewichtsausgleich durchführen zu können. Problematisch beim Befüllen der Regelzellen mit Seewasser ist die Geräuschentwicklung, welche u.a. aus dem Druckunterschied zwischen dem einströmenden Seewasser und dem Innendruck der Regelzelle, welche im Inneren des Druckkörpers des Unterseebootes gelegen ist, resultiert.

Um dies zu vermeiden, werden die Regelzellen mit Druckluft beaufschlagt, um für das einströmende Seewasser einen Gegendruck aufzubauen, so dass das Seewasser verlangsamt in die Regelzelle einströmt. Beim Einströmen des Seewassers muss die Druckluft dann wieder aus der Regelzelle abgeführt werden.

GB 077 43 A offenbart ein Unterseeboot, welches mit Wassertanks versehen ist, welche über Leitungen mit der Umgebung des Unterseebootes verbunden sind. In diesen Leitungen sind Hähne angeordnet, um diese Leitungen öffnen und schließen zu können. Zum Tauchen werden die Tanks mit Wasser gefüllt. Zum Auftauchen wird dieses Wasser über Pumpen wieder aus den Tanks herausgepumpt. Je nachdem wie groß der Druckunterschied zwischen dem Inneren des Tanks und der Umgebung des Unterseebootes ist, kommt es bei dem Einströmen des Wassers in die Tanks zu einer unerwünschten Geräuschentwicklung.

Aus US 3,667,415 ist ein Unterseeboot bekannt, welches einen Tank aufweist, in welchen Wasser geleitet wird, wenn das Boot tauchen soll und aus dem das Wasser wieder herausgepumpt wird, um das Boot auftauchen zu lassen. In dem Tank ist eine Gasblase enthalten, um im Tank einen vorbestimmten Druck zu halten. In einem Betriebszustand, in dem der Umgebungsdruck größer ist als der Innendruck des Tankes, kann Wasser allein durch die Druckdifferenz in den Tank geleitet werden. Je nach Größe der Druckdifferenz kann es hier ebenfalls zu einer unerwünschten Geräuschentwicklung kommen.

Es ist Aufgabe der Erfindung, ein verbessertes Unterseeboot zu schaffen, bei welchem die Regelzellen auf vereinfachte Weise möglichst geräuscharm im Seewasser gefüllt werden können.

Diese Aufgabe wird durch ein Unterseeboot mit den im Anspruch 1 angegebenen Merkmalen gelöst. Bevorzugte Ausführungsformen ergeben sich aus den zugehörigen Unteransprüchen, der nachfolgenden Beschreibung und den beigefügten Figuren.

Grundgedanke der Erfindung ist die nachfolgend beschriebene Anordnung eines Wasserdrosselventils. Weiter betrifft die Erfindung mögliche Ausgestaltungen dieses Ventils, welches gegebenenfalls auch bei anderen Anwendungen zum Einsatz kommen kann.

Das erfindungsgemäße Unterseeboot weist zumindest eine, vorzugsweise mehrere Regelzellen auf, welche über zumindest eine, vorzugsweise mehrere Leitungen mit Seewasser aus der Umgebung des Unterseebootes befüllbar sind. Erfindungsgemäß ist in der zumindest einen Leitung, durch welche die Regelzelle mit Seewasser befüllt wird, ein Wasserdrosselventil angeordnet, welches den Druck des durch die Leitung in die Regelzelle einströmenden Seewassers reduziert. Auf diese Weise ist es möglich, auch bei getauchtem Unterseeboot das Seewasser nur mit einem reduzierten Druck in die Regelzelle einströmen zu lassen, so dass hier Kavitationsgeräusche aufgrund einer Druckdifferenz zwischen dem einströmenden Seewasser und dem Innendruck der Regelzelle vermieden werden. Dies ist insbesondere bei größeren Tauchtiefen wichtig, in welchen der Druck des Seewassers, welches das Unterseeboot umgibt, deutlich höher ist als der Innendruck der Regelzelle, welche im Inneren des Druckkörpers des Unterseebootes gelegen ist. Durch das Vorsehen einer Drossel in der Wasserzufuhr zu der Regelzelle wird das Vorspannen der Regelzelle mit Druckluft überflüssig, wodurch der Regelvorgang, d.h. das Befüllen der Regelzellen mit Seewasser deutlich vereinfacht wird. Gleichzeitig können Geräusche zuverlässig minimiert werden.

Das Wasserdrosselventil ist in seiner Drosselwirkung einstellbar. Dies ermöglicht, die Drosselwirkung insbesondere an die Tauchtiefe des Unterseebootes, d.h. den Umgebungsdruck anzupassen, so dass auch bei größerem Umgebungsdruck eine ausreichende Drosselwirkung gegeben ist, so dass das Wasser vorzugsweise mit dem im Inneren der Regelzelle herrschenden Druck in diese einströmt, so dass Kavitationsgeräusche aufgrund einer Druckabsenkung unter Dampfdruck vermieden werden. Bei geringerer Tauchtiefe und somit geringerem Druck der Regelzelle zugeführten Seewassers kann dann die Drosselwirkung entsprechend reduziert werden. Ferner kann die Leitung auch zum Entleeren der Regelzelle in umgekehrter Strömungsrichtung genutzt werden. Dabei wird die Drosselwirkung vorzugsweise reduziert oder ganz aufgehoben.

Ferner ist eine Steuereinrichtung vorgesehen, welche die Drosselwirkung des Wasserdrosselventils entsprechend in Abhängigkeit des Druckes im Inneren der Regelzelle und/oder des Druckes des das Unterseeboot umgebenden Seewassers einstellt. D.h. der Einstellvorgang kann besonders bevorzugt automatisch geschehen, so dass durch die Steuereinrichtung stets ein geräuschoptimiertes Befüllen der Regelzelle durch Anpassen der Drosselwirkung an die Druckdifferenz zwischen Innendruck der Regelzelle und Druck des umgebenden Seewassers sichergestellt wird. Zweckmäßigerweise weist das Wasserdrosselventil jedoch auch bei automatisierter Betätigung eine manuell betätigbare Notbetätigung vor.

Weiter bevorzugt weist das Wasserdrosselventil neben zumindest einer Drosselstellung eine schaltbare Absperrstellung auf, in welcher es die Leitung sperrt. D.h. das Drosselventil kann gleichzeitig die Füllleitung der Regelzelle unterbrechen, so dass hier auf zusätzliche Ventile zum Öffnen und Schließen der Regelzelle verzichtet werden kann.

Um die gewünschte Drosselwirkung bereitstellen zu können, weist das Wasserdrosselventil bevorzugt zumindest einen Strömungspfad mit zumindest einem darin angeordneten Drosselelement auf. Das Drosselelement kann beispielsweise in Form einer Querschnittsverengung mit sich anschließender Querschnittserweiterung in Strömungsrichtung ausgebildet sein.

Besonders bevorzugt weist das Wasserdrosselventil mehrere Drosselelemente und zumindest ein Schaltelement auf, durch welches einzelne Drosselelemente zumindest einem Strömungspfad wahlweise zuschaltbar sind. Auf diese Weise wird es möglich, im Strömungspfad durch entsprechende Zuschaltung von Drosselelementen mehrere Drosselelemente hintereinander anzuordnen, um eine größere Drosselwirkung zu erreichen. Durch Abschalten einzelner Drosselelemente wird die Zahl der im Strömungspfad hintereinander liegenden Drosselelemente und somit die Drosselwirkung des Wasserdrosselventils verringert. Auf diese Weise ist die Drosselwirkung des Wasserdrosselventils einstellbar. Die einzelnen Drosselelemente können jeweils gleiche, aber auch unterschiedliche Drosselwirkungen aufweisen.

U. a. durch die bevorzugte Hintereinanderschaltung verschiedener Drosselelemente kann ein geräuscharmer Betrieb erreicht werden. Die richtige Kombination der Drosselelemente, welche sich aus der Druckdifferenz und dem Volumenstrom ergibt, verhindert eine Druckabsenkung unter den Dampfdruck in der Drosselstelle und damit eine Geräusch verursachende Kavitation.

Weiter bevorzugt weist das Wasserdrosselventil zumindest ein, vorzugsweise mehrere in Strömungsrichtung beabstandet zueinander in Reihe angeordnete Drosselelemente in Form von Querschnittsverengungen des Strömungspfades auf, wie es oben beschrieben wurde.

Die in dem Wasserdrosselventil angeordneten Drosselelemente können vorzugsweise als Lochbleche ausgebildet sein, welche durch ihre Löcher entsprechende Querschnittsverengungen definieren.

Gemäß einer ersten bevorzugten Ausführungsform weist das Wasserdrosselventil einen Strömungskanal mit einer Eintritts- und einer Austrittsöffnung sowie mehrerer in dem Strömungskanal in Strömungsrichtung in Reihe angeordnete Drosselelemente auf. Dabei sind die Drosselelemente vorzugsweise mittels eines Schaltelementes relativ zu der Eintritts- und/oder der Austrittsöffnung an dieser vorbeibewegbar, so dass die Anzahl der im Strömungspfad zwischen Ein- und Austrittsöffnung angeordneten Drosselelemente durch das Schaltelement veränderbar ist. D.h. die Drosselelemente werden in dem Strömungskanal z.B. in Strömungsrichtung verschoben, so dass die Anzahl der im Strömungskanal zwischen Ein- und Austrittsöffnung angeordneten Drosselelemente verändert wird. Die Ein- und/oder Austrittsöffnung kommt dabei ggf. an einer Position zwischen zwei Drosselelementen zu liegen, so dass eines der beiden Drosselelemente im Strömungspfad zwischen Ein- und Austrittsöffnung liegt und das andere Drosselelement außerhalb des Strömungspfades zwischen Ein- und Austrittsöffnung gelegen ist. D.h. durch das Schaltelement können die Drosselelemente aus dem Strömungspfad herausbewegt werden, so dass sie keine Drosselwirkung auf das zwischen der Ein- und Austrittsöffnung strömende Wasser haben.

Das Schaltelement ist vorzugsweise als Kolben oder Kolbenstange ausgebildet, welche in dem Strömungskanal in ihrer Längsrichtung, d.h. vorzugsweise auch der Längsrichtung des Strömungskanals, verschiebbar angeordnet ist und an welcher die Drosselelemente in Längsrichtung zueinander beabstandet angeordnet sind. Die Kolbenstange kann manuell oder durch einen geeigneten Stellantrieb z.B. elektrisch, hydraulisch oder pneumatisch bewegbar ausgebildet sein. Die Kolbenstange verschiebt die Drosselelemente, wie oben beschrieben derart, dass eine gewünschte Anzahl von Drosselelementen zwischen der Ein- und Austrittsöffnung positionierbar ist und diejenigen Drosselelemente, deren Drosselwirkung unerwünscht ist, aus dem Abschnitt zwischen Ein- und Austrittsöffnung herausbewegt werden. Die Drosselelemente sind an der Kolbenstange vorzugsweise in regelmäßigen Abständen angeordnet, wobei der Abstand zwischen zwei Drosselelementen vorzugsweise so groß gewählt ist, dass er größer ist als der Querschnitt der Ein- und/oder Austrittsöffnung in Längsrichtung des Strömungskanals. Auf diese Weise wird sichergestellt, dass die Ein- und/oder Austrittsöffnung an einer Position zwischen zwei Drosselelementen angeordnet werden kann, so dass das Wasser zwischen zwei Drosselelementen dem Strömungskanal zu- oder aus diesem abgeführt werden kann.

Weiter bevorzugt ist an der Kolbenstange ein Verschlusselement angeordnet, mittels welchem die Ein- und/oder Austrittsöffnung verschließbar ist. Das Verschlusselement kann beispielsweise als Kolben oder Kolbenring ausgebildet sein, welcher in dem Strömungskanal verschiebbar ist und über der Aus- oder Eintrittsöffnung, welche vorzugsweise in der Umfangswandung des Strömungskanals ausgebildet ist, dichtend zu liegen kommen kann, so dass die Öffnung verschlossen ist. Auf diese Weise kann das Wasserdrosselventil gleichzeitig als Absperrventil fungieren. Besonders bevorzugt ist an der Kolbenstange eine Vielzahl von Drosselelementen hintereinander angeordnet, wobei dann das Verschlusselement an einem Ende der Anordnung der Vielzahl von Drosselelementen angeordnet ist. Auf diese Weise kann eine Schalt- bzw. Stellbewegung des Wasserdrosselventils erreicht werden, welche vom abgesperrten Zustand bei Bewegung der Kolbenstange zunächst in einen Zustand mit größter Drosselwirkung schaltet und bei weiterer Bewegung der Kolbenstange nacheinander einzelne Drosselelemente aus dem Strömungspfad zwischen Ein- und Austrittsöffnung herausbewegt, um die Drosselwirkung immer weiter reduzieren zu können.

Gemäß einer zweiten bevorzugten Ausführungsform der Erfindung weist das Wasserdrosselventil zumindest zwei Strömungspfade auf. Dabei sind in einem ersten Strömungspfad in Strömungsrichtung beabstandet zueinander mehrere Drosselelemente angeordnet und in einem zweiten Strömungspfad in Strömungsrichtung hintereinander liegend mehrere Umschaltorgane, z. B. Dreiwegeventile, angeordnet. Die Umscahltorgane sind jeweils über einen Verbindungskanal mit jeweils einem zwischen zwei Drosselelementen gelegenen Bereich des ersten Strömungspfades verbunden. Diese Anordnung ermöglicht es durch Schalten der Umschaltorgane unterschiedliche Anzahlen von Drosselelementen dem Strömungspfad durch das Wasserdrosselventil zuzuschalten. Durch entsprechende Schaltung eines Umschaltorgans kann die Flüssigkeit zwischen zwei Drosselelementen aus dem ersten Strömungspfad in den zweiten Strömungspfad abgeleitet werden, so dass das Wasser in dem ersten Strömungspfad nur durch ein oder eine beschränkte Anzahl von Drosselelementen hindurchströmt und der weitere Strömungsweg durch das Wasserdrosselventil durch den zweiten Strömungspfad erfolgt. Ferner ist es vorzugsweise möglich, alle Umschaltorgane so zu schalten, dass das Wasser allein durch den zweiten Strömungspfad fließt und somit keinerlei Drosselwirkung an den Drosselelementen erfährt, welche alle in dem ersten Strömungspfad gelegen sind. Ferner ist es möglich beispielsweise ein in Strömungsrichtung erstes Umschaltorgan so zu schalten, dass von diesem durch den Verbindungskanal das Wasser in den ersten Strömungspfad geleitet wird. Gleichzeitig werden alle folgenden Umschaltorgane so geschaltet, dass deren Verbindungskanäle zwischen erstem und zweitem Strömungspfad geschlossen sind. Das letzte Umschaltorgan wird dann wieder so geschaltet, dass der Verbindungskanal zwischen erstem Strömungspfad und zweitem Strömungspfad geöffnet ist. Auf diese Weise ist es möglich, wenn Ein- und Austrittsöffnung des Wasserdrosselventils direkt mit dem zweiten Strömungspfad verbunden sind, das Wasser über das erste und das letzte Umschaltorgan durch den gesamten ersten Strömungspfad, d.h. durch die maximale Anzahl von Drosselelementen zu leiten, so dass es die größte Drosselwirkung erreicht wird. Die Drosselelemente sind auch hier vorzugsweise als beabstandet hintereinander angeordnete Lochbleche oder Lochanordnungen ausgebildet.

Besonders bevorzugt ist das Wasserdrosselventil aus mehreren vorzugsweise identischen Modulen aufgebaut, wobei jedes Modul einen Abschnitt des ersten Strömungspfades, einen Abschnitt des zweiten Strömungspfades, einen Drosselelement, ein Umschaltorgan sowie einen zugehörigen Verbindungskanal beinhaltet. Dieser Verbindungskanal verbindet innerhalb des Moduls den ersten mit dem zweiten Strömungspfad. Dieser modulare Aufbau vereinfacht die Herstellung und Wartung des Wasserdrosselventils. Ferner wird es ermöglicht, durch unterschiedliche Anzahlen von Modulen Wasserdrosselventile mit unterschiedlicher Drosselwirkung aufzubauen, wobei gleichzeitig die erforderliche Teilevielfalt reduziert werden kann.

Weiter bevorzugt weist jedes Modul an zwei einander abgewandten Stirnseiten jeweils Öffnungen des ersten Strömungspfades sowie des zweiten Strömungspfades auf, welche an den beiden Stirnseiten an zueinander korrespondierenden Positionen angeordnet sind. Dies ermöglicht es, die einzelnen Module, welche vorzugsweise identisch aufgebaut sind, beliebig miteinander zu kombinieren, d.h. insbesondere eine beliebige Anzahl von Modulen aneinander zu setzen. Dabei ist sichergestellt, dass, wenn zwei Module aneinandergesetzt werden, die Öffnung des ersten Strömungspfades an der ersten Stirnseite des ersten Moduls mit der Öffnung des ersten Strömungspfades an der zweiten Stirnseite des zweiten Moduls zur Anlage kommt. Entsprechend kommt die Öffnung des zweiten Strömungspfades an der ersten Stirnseite des ersten Moduls mit der Öffnung des zweiten Strömungspfades an der zweiten Stirnseite des zweiten Moduls deckungsgleich zur Anlage. D.h. die Öffnungen vom ersten und zweiten Strömungspfad sind an den entgegengesetzten Stirnseiten jedes Moduls jeweils spiegelbildlich ausgebildet, so dass sie vorzugsweise deckungsgleich mit den Öffnungen an einem angrenzenden Modul zur Anlage kommen können. Zwischen den einzelnen Modulen werden dann vorzugsweise Dichtungselemente angeordnet, um den ersten und den zweiten Strömungspfad gegeneinander sowie das gesamte Wasserdrosselventil nach außen abzudichten.

Weiter bevorzugt weisen die Module jeweils Durchgangslöcher auf, welche sich jeweils von einer Stirnseite zu einer entgegengesetzten Stirnseite des Moduls erstrecken. Dies ermöglicht es, durch die aneinandergesetzten Module Spannelemente bzw. Spannbolzen hindurchzuführen, welche das ganze Paket aneinandergesetzter Module verspannen und so die einzelnen Module aneinander halten.

Die Umschaltorgane sind vorzugsweise manuell, elektrisch, hydraulisch und/oder pneumatisch betätigbar. Im Falle einer elektrischen, hydraulischen oder pneumatischen Betätigung ist eine automatisierte Ansteuerung der Umschaltorgane von einer Steuereinrichtung möglich, welche das Wasserdrosselventil automatisiert in Abhängigkeit der gegebenen Druckverhältnisse einstellt, wie es bereits oben beschrieben wurde.

Nachfolgend wird ei Erfindung beispielhaft anhand der beigefügten Figuren beschrieben. In diesen zeigt:
- Fig. 1: eine schematische Schnittansicht eines Wasserdrosselventils gemäß einer ersten Ausführungsform der Erfindung,
- Fig. 2: eine Explosionsansicht des Wasserdrosselventils gemäß Fig. 1,
- Fig.3: schematisch eine erste Schaltstellung des Wasserdrosselventils gemäß Figuren 1 und 2,
- Fig.4: schematisch eine zweite Schaltstellung des Wasserdrosselventils gemäß Figuren 1 und 2,
- Fig.5: schematisch eine dritte Schaltstellung des Wasserdrosselventils gemäß Figuren 1 und 2,
- Fig. 6: eine schematische Schnittansicht eines Wasserdrosselventils gemäß einer zweiten Ausführungsform der Erfindung in einer ersten Schaltstellung,
- Fig. 7: eine Schnittansicht des Wasserdrosselventils gemäß Fig. 6 in einer zweiten Schaltstellung und
- Fig.8: das Wasserdrosselventil gemäß Figuren 6 und 7 in einer dritten Schaltstellung.

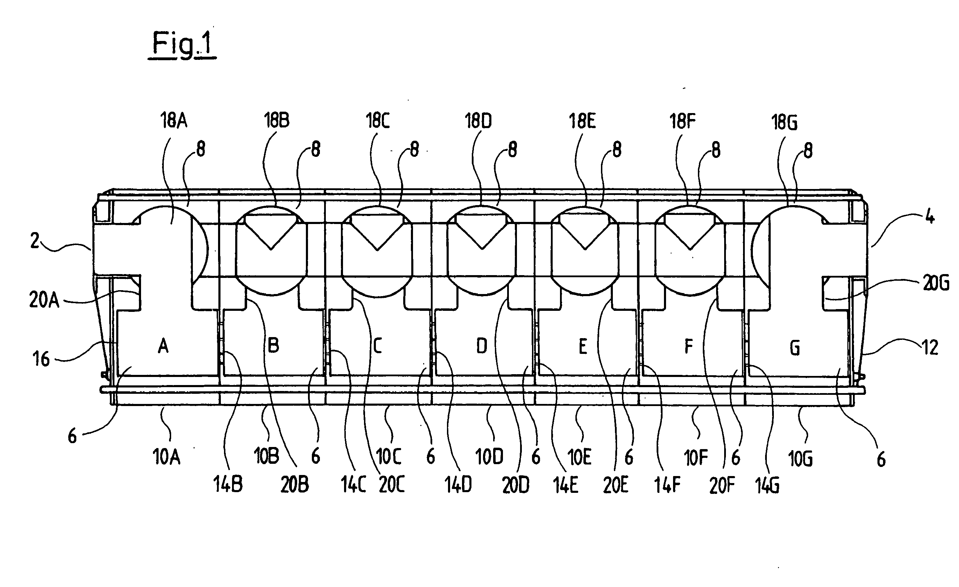

Fig. 1 zeigt eine erste Ausführungsform des Wasserdrosselventils des erfindungsgemäßen Unterseebootes. Dieses Wasserdrosselventil ist in der Füllleitung einer Regelzelle des Unterseebootes angeordnet. Das Wasserdrosselventil weist an entgegengesetzten Enden zwei Anschlüsse 2 und 4 auf, von welchen ein Anschluss, beispielsweise der Anschluss 4 mit der Regelzelle und der andere Anschluss, beispielsweise der Anschluss 2 in Verbindung mit dem das Unterseeboot umgebenden Seewasser steht. Das Wasserdrosselventil weist zwei zueinander parallele Strömungspfade 6 und 8 auf, wobei die Anschlüsse und 2 und 4 an den entgegengesetzten Enden des zweiten Strömungspfades 8 angeordnet sind.

Das Wasserdrosselventil ist im gezeigten Beispiel aus sieben Modulen 10A bis 10G aufgebaut. Die Module sind jeweils so aufgebaut, dass sie einen Abschnitt des ersten Strömungspfades 6 sowie einen Abschnitt des zweiten Strömungspfades 8 aufweisen. Dazu ist in jedem Modul 10 der den ersten Strömungspfad 6 bildende Kanal zu einer Seite, in Fig. 1 die rechte Seite geöffnet. Diese Öffnung ist bei dem letzten Modul 10G durch eine Abdeckplatte 12 verschlossen. An der entgegengesetzten Stirnseite ist in dem den ersten Strömungspfad definierenden Kanal in jedem Modul ein Lochblech 14 (14B bis 14G) bzw. eine gelochte Wandung angeordnet. Bei dem ersten Modul 10A ist diese Stirnseite mit einer geschlossenen Wandung 16 versehen. Die auf diese Weise voneinander beabstandeten Lochbleche 14B bis 14G bilden die Drosselstellen des Wasserdrosselventils, wobei die Lochbleche 14B bis 14G im gezeigten Beispiel unterschiedliche Anzahlen von Löchern haben, um unterschiedliche Drosselwirkungen bereitstellen zu können. Alternativ ist es jedoch auch möglich, die Lochbleche 14B bis 14G identisch, d.h. mit gleichgroßen und gleichen Anzahlen von Löchern auszubilden.

Der zweite Strömungspfad 8 jedes Ventils wird jeweils durch ein Umschaltorgan in Form eines Dreiwege- bzw. 3/3-Wege-Ventil 18A bis 18G definiert. Die Dreiwegeventile 18A bis 18G sind derart in Reihe geschaltet, dass jeweils der Ausgang eines Dreiwegeventils 18 mit dem Eingang des nächsten Dreiwegeventils 18 verbunden ist. Jedes der Dreiwegeventil 18A bis 18G ist ferner über einen Verbindungskanal 20A bis 20G mit dem zugehörigen Abschnitt des ersten Strömungspfades 6 des zugehörigen Moduls 10 verbunden. Auf diese Weise kann durch entsprechende Schaltung der Dreiwegeventile 18 die Strömung von dem Anschluss 2 zu dem Anschluss 4 bzw. umgekehrt von dem Anschluss 4 zu dem Anschluss 2 zwischen dem ersten Strömungspfad 6 und dem zweiten Strömungspfad 8 umgeschaltet werden, um entweder durch die einzelnen Lochbleche 14B bis 14G oder aber direkt durch die Dreiwegeventile an den Lochblechen vorbeigeleitet zu werden. Anstelle von Dreiwegeventilen können in entsprechender Weise andere geeignete Umschaltorgane eingesetzt werden, um die unterschiedlichen Strömungswege zu schalten.

Im in Fig. 1 gezeigten Beispiel ist beispielsweise das erste Dreiwegeventil 18A so geschaltet, dass der Anschluss 2 mit dem ersten Strömungspfad 6 in dem Modul 10A über den Verbindungskanal 20A verbunden ist. Gleichzeitig wird durch das Dreiwegeventil 18A die Verbindung zu dem Dreiwegeventil 18B in dem Modul 10B verschlossen. Die Dreiwegeventile 18B bis 18F sind so geschaltet, dass die Verbindungskanäle 20B bis 20F geschlossen sind. Auf diese Weise wird die Strömung durch die Lochbleche 14B bis 14G aller Module 10A bis 10G geleitet. Das letzte Dreiwegeventil 18G ist wiederum so geschaltet, dass der Verbindungskanal 20G mit dem Anschluss 4 verbunden ist und die Verbindung im ersten Strömungsweg 8 von dem Dreiwegeventil 18F zu dem Dreiwegeventil 18G unterbrochen ist. In dieser Schaltstellung erreicht das Wasserdrosselventil seine größte Drosselwirkung, da Wasser, welche von dem Anschluss 2 zu dem Anschluss 4 oder umgekehrt strömt durch alle Drosselelemente, d.h. durch alle Lochbleche 14B bis 14G geleitet wird.

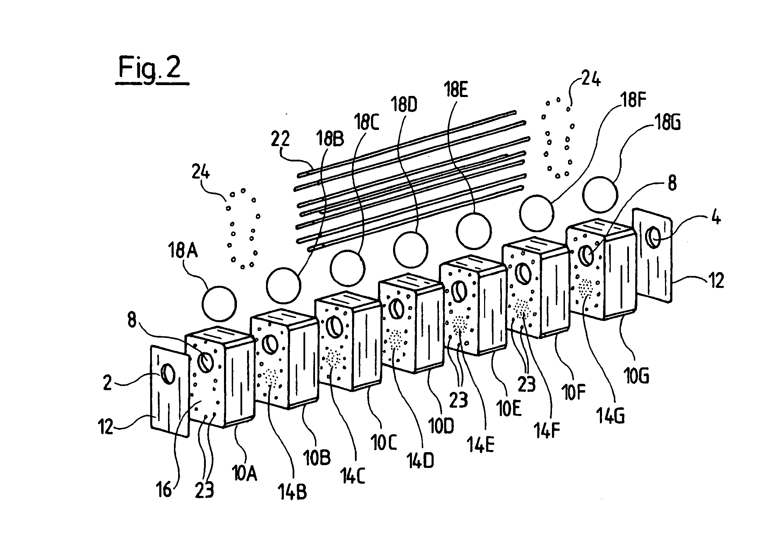

Fig. 2 zeigt eine Explosionsansicht des Wasserdrosselventils gemäß Fig. 1. Die blockförmigen Module 10A bis 10G sind im Wesentlichen identisch ausgebildet, im gezeigten Beispiel weisen lediglich die Lochbleche 14B bis 14G unterschiedliche Anzahlen bzw. Größen von Löchern zur Bereitstellung unterschiedlicher Drosselwirkungen auf. Ferner ist bei dem Modul 10A an der Stirnwand statt eines Lochbleches eine geschlossene Wandung 16 ausgebildet. Die Module 10 sind so ausgebildet, dass jeweils die Löcher das Lochbleches 14B bis 14G einer Öffnung an der entgegengesetzten Stirnseite des vorangehenden Moduls gegenüberliegen, welche dem ersten Strömungspfad 6 zugehörig ist.

Bei der Herstellung der Module 10 ist es bevorzugt, die Lochbleche 14B bis 14G in der Weise auszubilden, dass jedes Modul 10 zunächst eine geschlossene Wandung wie die Wandung 16 bei dem Modul 10A aufweist. Anschließend wird bei jedem Modul eine gewünschte Lochung in die Wandung eingebracht, d. h. das Modul wir charakterisiert. Dies ermöglicht, zunächst identische Module 10 vorzufertigen und dann in einem zusätzlichen, vorzugsweise letzten Arbeitsschritt die gewünschte, ggf. unterschiedliche Lochung in jedes Modul einzubringen.

Ferner sind an beiden entgegengesetzten Stirnseiten der Module 10 jeweils Öffnungen ausgebildet, welche bei aneinander gesetzten Modulen einander gegenüberliegen und den zweiten Strömungspfad 8 definieren und einen durchgehenden Strömungspfad 8 durch alle Module gewährleisten. Diese Ausnehmungen sind die Anschlüsse der Dreiwegeventile 18A bis 18F, welche hier als Kugelventile ausgebildet sind. Die blockförmigen Module 10A bis 10G werden durch Spannelemente in Form von Verbindungsstangen 22 verbunden, welche durch Durchgangslöcher 33 in den einzelnen Modulen geführt werden und an den Stirnseiten an den den Modulen 10A bis 10G abgewandeten Oberflächen der Abdeckplatten 12 mittels Muttern 24 verbunden werden. Auf diese Weise werden die Module miteinander verspannt. Zwischen den einzelnen Modulen 10A bis 10G werden vorzugsweise noch Dichtungselemente angeordnet, um die beiden Strömungspfade 6 und 8, welche sich durch die Reihe von Modulen erstrecken, nach außen und gegeneinander abzudichten.

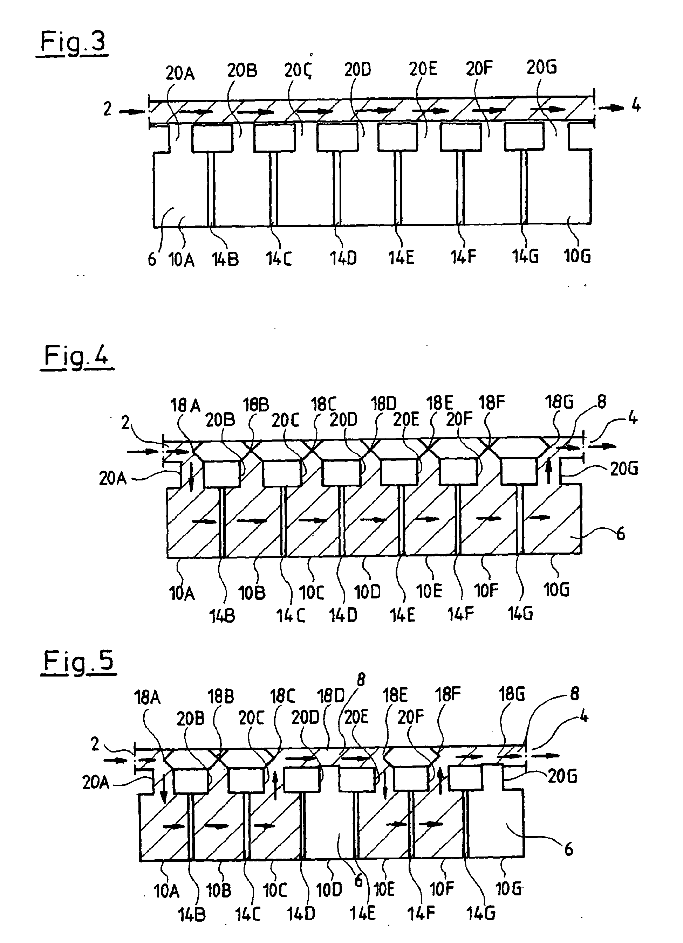

Anhand der schematischen Darstellungen in Figuren 3 bis 5 werden nun verschiedene Schaltstellungen des Wasserdrosselventils gemäß Figuren 1 und 2 beschrieben. Bei der Schaltstellung gemäß Fig. 3 sind alle Dreiwegeventile 18A bis 18G so geschaltet, dass ein durchgehender Strömungspfad entlang dem zweiten Strömungspfad 8 von dem Anschluss 2 zu dem Anschluss 4 geschaltet wird, d.h. die Verbindungskanäle 20A bis 20G sind alle geschlossen. In diesen Schaltstellungen verbinden die Dreiwegeventile 18A bis 18G jeweils die an entgegengesetzten Stirnseiten jedes Moduls 10A bis 10G gelegene Öffnungen bzw. Anschlussöffnungen, welche den zweiten Strömungspfad 8 definieren. In der in Fig. 3 gezeigten Schaltstellung strömt das Wasser von dem Anschluss 2 zu dem Anschluss 4 oder umgekehrt mit der geringstmöglichsten Drosselwirkung des Wasserdrosselventils.

Fig. 4 zeigt die auch in Fig. 1 gezeigte Schaltstellung, bei welcher die Dreiwegeventile 18A und 18G so geschaltet sind, dass die Anschlüsse 2 und 4 durch die Verbindungskanäle 20A bzw. 20G direkt mit dem ersten Strömungspfad 6 durch die Drosselelemente 14B bis 14G verbunden sind. Die Dreiwegeventile 18B bis 18F sind so geschaltet, dass die Verbindungskanäle 20B bis 20F geschlossen sind. Auf diese Weise wird das Wasser von dem Anschluss 2 zu dem Anschluss 4 oder in umgekehrter Richtung vollständig über den ersten Strömungspfad durch die Drosselelemente bzw. Lochbleche 14D bis 14G geleitet, so dass hier die größtmögliche Drosselwirkung erzielt wird.

Fig. 5 zeigt ein Art Schaltstellung, bei welcher das Dreiwegeventil 18 genauso geschaltet ist wie in Fig. 4. D.h. hier wird der Anschluss 2 über den Verbindungskanal 20A direkt mit dem ersten Strömungspfad in dem Modul 10A verbunden. Das Dreiwegeventil 18B ist wiederum so geschaltet, dass der Verbindungskanal 20B geschlossen ist. Auf diese Wiese wird das Wasser durch die Lochbleche 14B und 14C geleitet. Das Dreiwegeventil 18C ist so geschaltet, dass der Verbindungskanal 20C geöffnet ist und zwar zu dem zweiten Strömungspfad 8 des Moduls 10D, d.h. dem Dreiwegeventil 18D hin. Das Dreiwegeventil 18D befindet sich in einer Schaltstellung, in welcher es auf Durchgang im zweiten Strömungspfad 8 geschaltet ist, d.h. es verbindet die beiden den Strömungspfad 8 definierenden Öffnungen an den entgegengesetzten Seiten des Moduls 10D und verschließt gleichzeitig den Verbindungskanal 20D. Auf diese Weise wird erreicht, dass ein Großteil der Strömung durch den Verbindungskanal 20C und den zweiten Strömungspfad 8 in dem Modul 10D fließt. Nur ein geringer Teil der Strömung wird durch die Lochbleche 14D und 14E sowie den ersten Strömungspfad 6 in dem Modul 10D fließen. Auf diese Weise wird an dieser Stelle die Drosselwirkung gegenüber der in Fig. 4 gezeigten Schaltstellung verringert. Das Dreiwegeventil 18E ist so geschaltet, dass der Verbindungskanal 20F geöffnet ist und die Verbindung zu dem Dreiwegeventil 18F in dem Modul 10F geschlossen ist, d.h. dass Dreiwegeventil 18E sowie das Dreiwegeventil 18F verschließen die direkte Verbindung entlang dem zweiten Strömungspfad 8 zwischen den Modulen 10E und 10F, so dass hier die Strömung über die Verbindungskanäle 20F und 20E sowie das Lochblech 14F geführt wird. Das Dreiwegeventil 18F stellt wiederum über den Verbindungskanal 20E die Verbindung zu dem zweiten Strömungspfad 8 in dem Modul 20G her. Dabei ist das Dreiwegeventil 18G so geschaltet, dass es direkt den zweiten Strömungspfad des Moduls 10F, d.h. den entsprechenden Anschluss des Dreiwegeventils 18F mit dem Anschluss 4 verbindet und den Verbindungskanal 20G verschließt. Insofern erfolgt hier keine Wasserströmung durch das Lochblech 14G, wobei auch an dieser Stelle die Drosselwirkung gegenüber der Schaltstellung gemäß Fig. 4 verringert wird.

Es ist zu verstehen, dass die Dreiwegeventile 18A bis 18G auch anders als in den Figuren 3 bis 5 geschaltet werden können, so dass die Strömung beliebig durch die einzelnen Drosselelemente, d.h. die Lochbleche 14B bis 14G, oder direkt durch den zweiten Strömungsweg 8 im Wesentlichen ohne Drosselwirkung geführt werden kann. Auf diese Weise ist es möglich, die einzelnen Drosselelemente 14B bis 14G einzeln oder in Kombination beliebig dem Strömungspfad zwischen dem Anschluss 4 und Anschluss 2 zuzuschalten, um die Drosselwirkung zu variieren. Insofern kann die Drosselwirkung des Wasserdrosselventils an die Druckdifferenz zwischen der Regelzelle und dem umgebenden Seewasser angepasst werden, so dass der Wasserdruck des einströmenden Seewassers in dem Wasserdrosselventil soweit gedrosselt wird, dass der Druck nur noch geringfügig höher als der Druck im Inneren der Regelzelle ist. Auf diese Weise wird Kavitation beim Einströmen des Wassers in die Regelzelle vermieden und auftretende Geräusche werden minimiert.

Auch beim Entleeren der Regelzelle, wenn das Wasser aus der Regelzelle mittels Druckluft ausgedrückt wird, wird das Seewasser durch das Wasserdrosselventil geleitet, wobei dann vorzugsweise die Schaltstellung gemäß Fig. 3 mit der geringsten Drosselwirkung gewählt wird. Ferner kann das Wasserdrosselventil auch in eine vollständig geschlossene Stellung gebracht werden, nämlich beispielsweise durch zusätzliches Schalten des Dreiwegeventils 18A oder 18G in den Schaltstellungen gemäß Fig. 1 bis 5 in der Weise, dass das Dreiwegeventil den zugehörigen Anschluss 2 oder 4 verschließt. D.h. das Dreiwegeventil 18A oder 18G wird in eine Schaltstellung gebracht, welche der in Fig. 1 gezeigten Schaltstellung um 180° entgegengesetzt ist. Durch diese Absperrfunktion ermöglicht das Wasserdrosselventil, auf ein zusätzliches Absperrventil in der Leitung, welche die Regelzelle mit der Umgebung verbindet, zu verzichten.

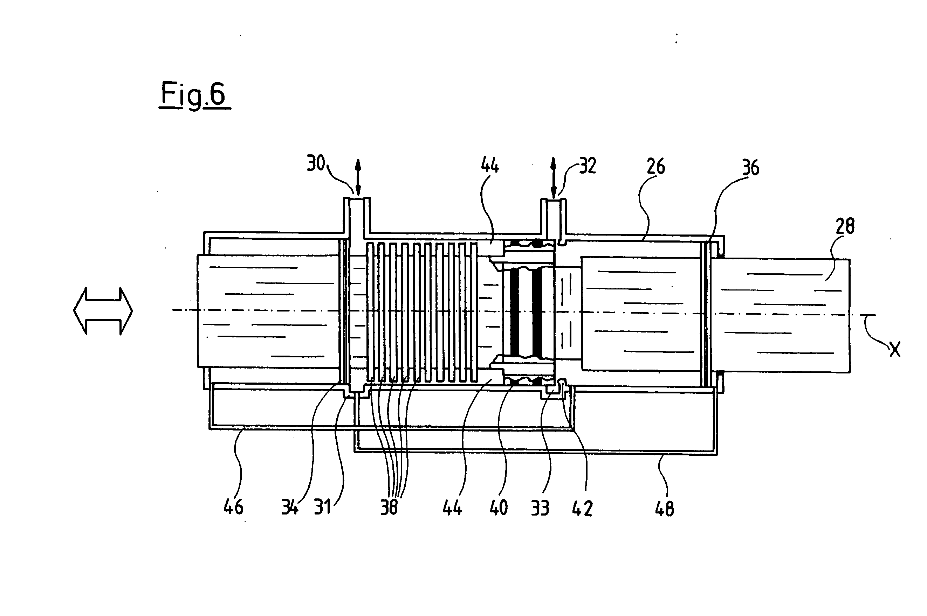

Figuren 6 bis 8 zeigen eine zweite mögliche Ausführungsform eines Wasserdrosselventils zur Anordnung in der Leitung zu einer Regelzelle des erfindungsgemäßen Unterseebootes.

Das Wasserdrosselventil weist einen zylindrischen Strömungskanal 26 auf, in welchem ein Kolben bzw. eine Kolbenstange 28 in Richtung der Längsachse X des Strömungskanals bewegbar ist. In der Umfangswandung sind in Richtung der Längsachse X voneinander beabstandet zwei Anschlüsse 30 und 32 angeordnet, welche den Anschlüssen 2 und 4 gemäß der ersten Ausführungsform entsprechen, d.h. einer der Anschlüsse 30 und 32 steht in Verbindung mit der Regelzelle, der andere mit dem das Unterseeboot umgebenden Seewasser.

An dem Kolben 28 sind beabstandet voneinander zwei an der Innenwandung des Strömungskanals 26 anliegende Dichtringe 34 und 36 ausgebildet. Zwischen den Dichtringen 34 und 36 sind beabstandet voneinander im gezeigten Beispiel 10 Drosselscheiben 38 in Form von Lochblechen angeordnet. Die Drosselscheiben 38 erstrecken sich ringförmig um den Kolben 28 herum und weisen Durchgangslöcher parallel zur Längsachse X von einer Stirnfläche zu der anderen Stirnfläche auf. Es können alle Drosselscheiben 38 identisch ausgebildet sein. Ferner ist es möglich die Lochanzahl und die Lochgröße in den einzelnen Drosselscheiben 38 unterschiedlich auszubilden, um unterschiedliche Drosseleigenschaften bereitstellen zu können.

Neben dem von den Drosselscheiben 38 gebildeten Drosselscheibenpaket ist zu dem Dichtring 36 hin gelegen ein Verschlussring 40 an dem Kolben 28 angeordnet. Dieser Verschlussring 40 liegt dichtend an der Innenfläche des Strömungskanals 26 an und bildet ein Verschlusselement zum Verschließen der Öffnung 32. Dazu ist der Verschlussring 40 in Richtung der Längsachse X breiter ausgebildet als der Anschluss 32.

Die Anschlüsse 30 und 32 münden jeweils in einen Ringkanal, um das Wasser gleichmäßig in dem Raum zwischen der Innenwandung des Strömungskanals 26 und dem Kolben 28 zu verteilen. Zum Verschließen des Anschlusses 32 kann der Verschlussring 40 ferner in axialer Richtung dichtend an einem ringförmigen Vorsprung 42 zur Anlage kommen. In dem Verschlussring 40 sind umfänglich des Kolbens 28 sich parallel zur Längsachse X erstreckende Kanäle 44 ausgebildet, welche die beiden axialen Stirnseiten des Verschlussringes 40 miteinander verbinden.

Fig. 6 zeigt die vollständig geschlossene Stellung des Wasserdrosselventils, bei welcher der Verschlussring 40 an dem Vorsprung 42 zur Anlage kommt und so den Anschluss 32 und die mit diesem in Verbindung stehende umfängliche Nut 33 verschließt. So ist der Strömungspfad zwischen den Anschlüssen 30 und 32 blockiert.

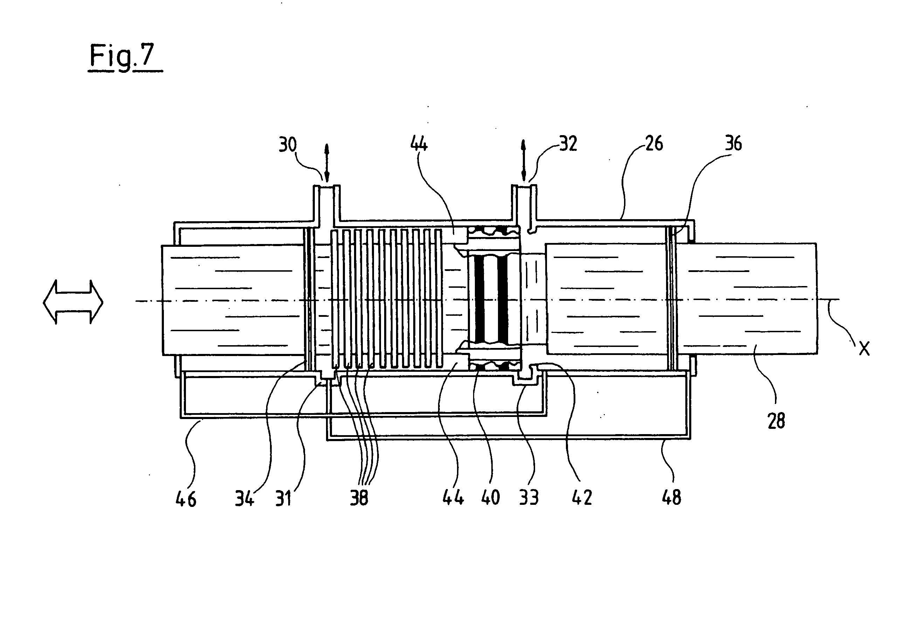

Fig. 7 zeigt eine geöffnete Stellung des Wasserdrosselventils gemäß Fig. 6 mit maximaler Drosselwirkung. In dieser Stellung ist der Kolben 28 geringfügig in Richtung des Anschlusses 30 in Richtung der Längsachse X verschoben worden, so dass der Verschlussring 40 den Anschluss 32 und die Ringnut 33 freigibt. Auf diese Weise wird ein Strömungspfad von dem Anschluss 32 durch die Ringnut 33 und die Kanäle 44 zu dem Paket von Drosselscheiben 38 geschaffen. Weiter verläuft der Strömungspfad durch die Drosselöffnungen der Drosselscheiben 38 zu der Ringnut 31 und dem Anschluss 30. So kann das Wasser mit maximaler Drosselwirkung vom Anschluss 32 zum Anschluss 30 oder in umgekehrte Richtung strömen.

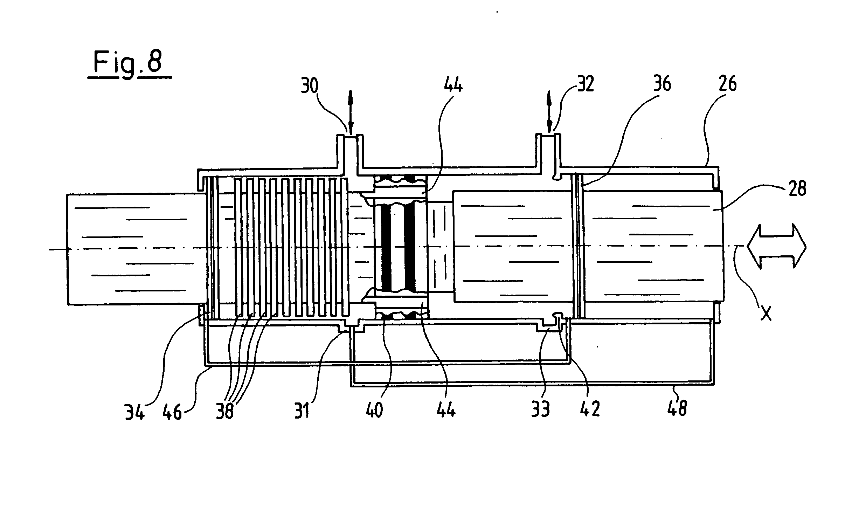

Fig. 8 zeigt eine Stellung des Wasserdrosselventils gemäß Figuren 6 und 7 in einer Position mit geringstmöglicher Drosselwirkung. In dieser Stellung ist der Kolben 28 noch weiter in Richtung des Anschlusses 30, d.h. in Fig. 8 nach links verschoben, so dass das gesamte Paket von Drosselscheiben 38 an dem Anschluss 30 vorbeibewegt worden ist und an der dem Anschluss 32 abgewandten Seite des Anschlusses 30 zu liegen kommt. Insofern verläuft der Strömungspfad zwischen den Anschlüssen 30 und 32 nun nicht mehr durch die Drosselscheiben 38, sondern von dem Anschluss 30 direkt durch die Kanäle 44 in dem Verschlussring 40 und von dort zwischen dem Außenumfang des Kolbens 28 und dem Innenumfang des Strömungskanals 26 zu dem Anschluss 32. Zwischen den in Figuren 7 und 8 gezeigten Stellungen sind auch noch Zwischenstellungen denkbar, in welchen lediglich ein Teil der Drosselscheiben 38 aus dem Bereich des Strömungskanals 26 zwischen den Anschlüssen 30 und 32 herausbewegt worden ist, so dass der Strömungspfad durch einen Teil der Drosselscheiben 38 hindurch verläuft. Auf diese Weise ist durch Längsverschiebung des Kolbens 28 die Drosselwirkung einstellbar, um die Drosselwirkung dem Druckunterschied zwischen Regelzelle und umgebenden Seewasser anzupassen, so dass das Seewasser mit nur geringfügig höherem Druck als dem Innendruck der Regelzelle in diese einströmt und Kavitationsgeräusche vermieden werden können.

Um den Kolben leicht bewegen zu können, sind die Leitungen 46 und 48 vorgesehen. Dabei verbindet die Leitung 46 den rückseitigen, d.h. den Drosselscheiben 38 abgewandten Raum des Dichtringes 34 mit dem Bereich zwischen den Drosselscheiben 38 und dem Dichtring 36. Die Leitung 48 verbindet den rückseitigen, d.h. den den Drosselscheiben 38 abgewandten Bereich des Dichtringes 36 mit der Ringnut 31, d.h. einem Bereich zwischen den beiden Dichtringen 34 und 36. Dabei sind die Leitungen 46 und 48 fest an dem Strömungskanal 36 angeordnet. Die Leitungen 46 und 48 sorgen für einen Druckausgleich, so dass zur Betätigung des Kolbens im Wesentlichen nur die Reibungskräfte überwunden werden müssen.

### Bezugszeichenliste

- 2, 4: Anschlüsse
- 6, 8: Strömungspfade
- 10: Module
- 12: Abdeckplatte
- 14: Lochblech
- 16: Wandung
- 18: Dreiwegeventil
- 20: Verbindungskanal
- 22: Verbindungsstangen
- 23: Durchgangslöcher
- 24: Muttern
- 26: Strömungskanal
- 28: Kolben
- 30, 32: Anschlüsse
- 31 , 33: Ringnuten
- 34, 36: Dichtringe
- 38: Drosselscheiben
- 40: Verschlussring
- 42: Vorsprung
- 44: Kanäle
- 46, 48: Leitungen

- X: Längsachse

## Patentansprüche

1. Unterseeboot mit zumindest einer Regelzelle, welche mit zumindest einer Leitung zum Befüllen mit Seewasser verbunden ist, wobei in der Leitung ein Wasserdrosselventil angeordnet ist, welches den Druck des durch die Leitung in die Regelzelle einströmenden Seewassers reduziert, **dadurch gekennzeichnet, dass** das Wasserdrosselventil in seiner Drosselwirkung einstellbar ist und eine Steuereinrichtung vorgesehen ist, welche die Drosselwirkung des Wasserdrosselventils in Abhängigkeit des Druckes im Inneren der Regelzelle und/oder des Druckes des das Unterseeboot umgebenden Seewassers einstellt.

2. Unterseeboot nach einem der vorangehenden Ansprüche, **dadurch gekennzeichnet, dass** das Wasserdrosselventil neben zumindest einer Drosselstellung eine schaltbare Absperrstellung aufweist, in welcher es die Leitung sperrt.

3. Unterseeboot nach einem der vorangehenden Ansprüche, **dadurch gekennzeichnet, dass** das Wasserdrosselventil zumindest einen strömungspfad (6) mit zumindest einem darin angeordneten Drosselelement (14; 38) aufweist.

4. Unterseeboot nach einem der vorangehenden Ansprüche, **dadurch gekennzeichnet, dass** das Wasserdrosselventil mehrere Drosselelemente (14; 38) und zumindest ein Schaltelement (18; 28) aufweist, durch welches einzelne Drosselelemente (14; 38) zumindest einem Strömungspfad wahlweise zuschaltbar sind.

5. Unterseeboot nach einem der vorangehenden Ansprüche, **dadurch gekennzeichnet, dass** das Wasserdrosselventil zumindest ein, vorzugsweise mehrere in Strömungsrichtung beabstandet zueinander in Reihe angeordnete Drosselelemente (14; 38) in Form von Querschnittsverengungen aufweist.

6. Unterseeboot nach einem der Ansprüche 3 bis 5, **dadurch gekennzeichnet, dass** die in dem Wasserdrosselventil angeordneten Drosselelemente (14; 38) als Lochbleche ausgebildet sind.

7. Unterseeboot nach einem der vorangehenden Ansprüche, **dadurch gekennzeichnet, dass** das Wasserdrosselventil einen Strömungskanal mit einer Eintritts- (30) und einer Austrittsöffnung (32) sowie mehrere in dem Strömungskanal (26) in Strömungsrichtung in Reihe angeordnete Drosselelemente (38) aufweist, wobei die Drosselelemente (38) mittels eines Schaltelementes (28) relativ zu der Eintritts- (30) und/oder der Austrittsöffnung (32) an dieser derart vorbei bewegbar sind, dass die Anzahl der im Strömungspfad zwischen Ein- (30) und Austrittsöffnung (32) angeordneten Drosselelemente (38) durch das Schaltelement (28) veränderbar ist.

8. Unterseeboot nach Anspruch 7, **dadurch gekennzeichnet; dass** das Schaltelement (28) als Kolbenstange ausgebildet ist, welche in dem Strömungskanal (26) in ihrer Längsrichtung (X) verschiebbar angeordnet ist und an welcher die Drosselelemente (38) in der Längsrichtung (X) zueinander beabstandet angeordnet sind.

9. Unterseeboot nach Anspruch 8, **dadurch gekennzeichnet, dass** an der Kolbenstange (28) ein Verschlusselement (40), mittels welchem die Ein- (30) und/oder Austrittsöffnung (32) verschließbar ist, angeordnet ist.

10. Unterseeboot nach einem der Ansprüche 1 bis 6, **dadurch gekennzeichnet, dass** das Wasserdrosselventil zumindest zwei Strömungspfade (6, 8) aufweist, wobei in einem ersten Strömungspfad (6) in Strömungsrichtung beabstandet zueinander mehrere Drosselelemente (14) angeordnet sind und in einem zweiten Strömungspfad (8) in Strömungsrichtung hintereinanderliegend mehrere Umschaltorgane (18) angeordnet sind, welche jeweils über einen Verbindungskanal mit jeweils einem zwischen zwei Drosselelementen (14) gelegenen Bereich des ersten Strömungspfades (6) verbunden sind.

11. Unterseeboot nach Anspruch 10 **dadurch gekennzeichnet, dass** das Wasserdrosselventil aus mehreren vorzugsweise identischen Modulen (10) aufgebaut ist, wobei jedes Modul (10) einen Abschnitt des ersten Strömungspfades (6), einen Abschnitt des zweiten Strömungspfades (8), ein Drosselelement (14), ein Umschaltorgan (18) sowie einen zugehörigen Verbindungskanal (20) beinhaltet.

12. Unterseeboot nach Anspruch 11, **dadurch gekennzeichnet, dass** jedes Modul (10) an zwei einander abgewandten Stirnseiten jeweils Öffnungen des ersten Strömungspfades (6) sowie des zweiten Strömungspfades (8) aufweist, welche an den beiden Stirnseiten an zueinander korrespondierenden Positionen angeordnet sind.

13. Unterseeboot nach Anspruch 11 oder 12, **dadurch gekennzeichnet, dass** die Module (10) jeweils Durchgangslöcher (23) aufweisen, welche sich von einer Stirnseite zu einer entgegengesetzten Stirnseite des Moduls (10) erstrecken.

14. Unterseeboot nach einem der Ansprüche 10 bis 13, **dadurch gekennzeichnet, dass** die Umschaltorgane (18) manuell, elektrisch, hydraulisch und/oder pneumatisch betätigbar sind.

## Claims

1. A submarine with at least one compensating tank, which is connected to at least one conduit for filling with seawater, wherein a water throttle valve is arranged in the conduit and reduces the pressure of the seawater flowing through the conduit into the compensating tank, **characterised in that** the water throttle valve is settable in its throttle effect and a control device is provided which sets the throttle effect of the water throttle valve in dependence on the pressure in the inside of the compensating tank and/or on the pressure of the sea water surrounding the submarine.

2. A submarine according to one of the preceding claims, **characterised in that** the water throttle valve apart from at least one throttle position has a switchable shut-off position, in which it blocks the conduit.

3. A submarine according to one of the preceding claims, **characterised in that** the water throttle valve comprises at least one flow path (6) with at least one throttle element (14; 38) which is arranged therein.

4. A submarine according to one of the preceding claims, **characterised in that** the water throttle valve comprises several throttle elements (14; 38) and at least one switch element (18; 28), by way of which individual throttle elements (14; 38) can be selectively connected to at least one flow path.

5. A submarine according to one of the preceding claims, **characterised in that** the water throttle valve comprises at least one, preferably several throttle elements (14; 38) in the form of cross-sectional narrowings, which are arranged in series distanced to one another in the flow direction.

6. A submarine according to one of the claims 3 to 5, **characterised in that** the throttle elements (14; 38) arranged in the water throttle valve are designed as perforated plates.

7. A submarine according to one of the preceding claims, **characterised in that** the water throttle valve comprises a flow channel with an entry opening (30) and with an exit opening (32) as well as several throttle elements (38) which are arranged in the flow channel (26) in series in the flow direction, wherein the throttle elements (38) by way of a switch element (28) are movable relative to the entry opening (30) and/or the exit opening (32) past these in a manner such that the number of throttle elements (38) arranged in the flow path between the entry opening (30) and exit opening (32) can be changed by way of the switch element (28).

8. A submarine according to claim 7, **characterised in that** the switch element (28) is designed as a piston rod which is arranged in the flow channel (26) in a displaceable manner in its longitudinal direction (X) and on which the throttle elements (38) are arranged distanced to one another in the longitudinal direction (X).

9. A submarine according to claim 8, **characterised in that** a closure element (40), by way of which the entry opening (30) and/or exit opening (32) is closable, is arranged on the piston rod (28).

10. A submarine according to one of the claims 1 to 6, **characterised in that** the water throttle valve comprises at least two flow paths (6, 8), wherein several throttle elements (14) are arranged in a first flow path (6) distanced to one another in the flow direction, and several switch-over elements (18) are arranged in a second flow path one after the other in the flow direction and in each case are connected via a connection channel in each case to a region of the first flow path (6) which is situated between two throttle elements (4).

11. A submarine according to claim 10, **characterised in that** the water throttle valve is constructed of several, preferably identical modules (10), wherein each module (10) includes a section of the first flow path (6), a section of the second flow path (8), a throttle element (14), a switch-over element (18) as well as an associated connection channel (20).

12. A submarine according to claim 11, **characterised in that** each module (10) on two end-sides which are away from one another, in each case comprises openings of the first flow path (6) as well as of the second flow path (8) which are arranged on both end-sides at positions corresponding to one another.

13. A submarine according to claim 11 or 12, **characterised in that** the modules (10) in each case comprise through-holes (23) which extend from one end-side to an opposite end-side of the module (10).

14. A submarine according to one of the claims 10 to 13, **characterised in that** the switch-over elements (18) are actuatable manually, electrically, hydraulically and/or pneumatically.

## Revendications

1. Sous-marin possédant au moins une cellule de régulation qui est reliée à au moins une canalisation servant pour le remplissage d'eau de mer, dans lequel est disposée dans la canalisation une vanne d'étranglement de l'eau qui réduit la pression de l'eau de mer qui entre dans la cellule de régulation par la canalisation, **caractérisé en ce que** la vanne d'étranglement de l'eau peut être réglée dans son effet d'étranglement et **en ce qu'**il est prévu un dispositif de commande qui règle l'effet d'étranglement de la vanne d'étranglement de l'eau en fonction de la pression régnant à l'intérieur de la cellule de régulation et/ou de la pression de l'eau de mer qui entoure le sous-marin.

2. Sous-marin selon l'une des revendications précédentes, **caractérisé en ce que** la vanne d'étranglement de l'eau présente, en plus d'une position d'étranglement, une position de fermeture commutable, dans laquelle elle ferme la canalisation.

3. Sous-marin selon l'une des revendications précédentes, **caractérisé en ce que** la vanne d'étranglement de l'eau présente au moins une voie d'écoulement (6) dans laquelle est disposé au moins un élément d'étranglement (14; 38).

4. Sous-marin selon l'une des revendications précédentes, **caractérisé en ce que** la vanne d'étranglement de l'eau comporte plusieurs éléments d'étranglement (14 ; 38) et au moins un élément de manoeuvre (18 ; 28) par lequel des éléments d'étranglement particuliers (14 ; 38) peuvent être commutés sélectivement sur au moins une voie d'écoulement.

5. Sous-marin selon l'une des revendications précédentes, **caractérisé en ce que** la vanne d'étranglement de l'eau comprend au moins un, de préférence plusieurs, élément(s) d'étranglement (14 ; 38) disposé(s) en série à distance les uns des autres dans la direction de l'écoulement, sous la forme de rétrécissements de la section transversale.

6. Sous-marin selon l'une des revendications 3 à 5, **caractérisé en ce que** les éléments d'étranglement (14 ; 38) disposés dans la vanne d'étranglement de l'eau sont constitués par des tôles perforées.

7. Sous-marin selon l'une des revendications précédentes, **caractérisé en ce que** la vanne d'étranglement de l'eau présente un canal d'écoulement muni d'une ouverture d'entrée (30) et d'une ouverture de sortie (32), ainsi que de plusieurs éléments d'étranglement (38) disposés dans le canal d'écoulement (26), en série dans la direction de l'écoulement, les éléments d'étranglement (38) pouvant être déplacés par rapport à l'ouverture d'entrée (30) et/ou à l'ouverture de sortie (32), le long de cette ouverture, au moyen d'un élément de manoeuvre (28) de façon telle que le nombre des éléments d'étranglement (38) disposés dans la voie d'écoulement entre l'ouverture d'entrée (30) et l'ouverture de sortie (32) peut être modifié par l'élément de manoeuvre (28).

8. Sous-marin selon la revendication 7, **caractérisé en ce que** l'élément de manoeuvre (28) est conçu comme une tige de piston qui est disposée de façon à pouvoir être déplacée dans le canal d'écoulement (26), dans sa direction longitudinale (X), et sur laquelle les éléments d'étranglement (38) sont disposés à distance les uns des autres dans la direction de la longueur (X).

9. Sous-marin selon la revendication 8, **caractérisé en ce que** sur la tige de piston (28) est disposé un élément obturateur (40) au moyen duquel l'ouverture d'entrée (30) et/ou l'ouverture de sortie (32) peut (peuvent) être obturée(s).

10. Sous-marin selon l'une des revendications 1 à 6, **caractérisé en ce que** la vanne d'étranglement de l'eau présente au moins deux voies d'écoulement (6,8), plusieurs éléments d'étranglement (14) étant disposés dans une première voie d'écoulement (6), à distance les uns des autres dans la direction de l'écoulement et plusieurs organes de manoeuvre (18) étant disposés dans une deuxième voie d'écoulement (8) les uns à la suite des autres dans la direction de l'écoulement, ces organes étant reliés chacun au moyen d'un canal de liaison à une région de la première voie d'écoulement (6) située entre deux éléments d'étranglement (14).

11. Sous-marin selon la revendication 10, **caractérisé en ce que** la vanne d'étranglement de l'eau est composée de plusieurs modules (10) de préférence identiques chaque module (10) comportant un segment de la première voie d'écoulement (6), un segment de la deuxième voie d'écoulement (8), un élément d'étranglement (14), un organe de manoeuvre (18), ainsi qu'un canal de liaison correspondant (20).

12. Sous-marin selon la revendication 11, **caractérisé en ce que** chaque module (10) présente respectivement sur deux faces frontales opposées l'une à l'autre des ouvertures de la première voie d'écoulement (6) ainsi que de la deuxième voie d'écoulement (8) qui sont disposées sur les deux côtés frontaux dans des positions qui se correspondent mutuellement.

13. Sous-marin selon la revendication 11 ou 12, **caractérisé en ce que** chaque module (10) présente des trous de passage (23) qui s'étendent d'une face frontale à une face frontale opposée du module (10).

14. Sous-marin selon l'une des revendications 10 à 13, **caractérisé en ce que** les organes de commande (18) peuvent être actionnés par voie manuelle, électrique, hydraulique et/ou pneumatique.
